# EUROPEAN PATENT SPECIFICATION

(11) **EP 3 988 376 B1**
(45) Date of publication and mention of the grant of the patent: **19.02.2025**
(21) Application number: 20825122.3
(22) Date of filing: 13.04.2020
(51) Int. Cl.: B60L 15/20

(54) **TRAIN SECURITY SYSTEM, TRAIN SECURITY CONTROL METHOD, AND ON-TRAIN DEVICE**
ZUGSICHERHEITSSYSTEM, ZUGSICHERUNGSSTEUERUNGSVERFAHREN UND VORRICHTUNG AN BORD DES ZUGES
SYSTÈME DE SÉCURITÉ DE TRAIN, PROCÉDÉ DE COMMANDE DE SÉCURITÉ DE TRAIN ET DISPOSITIF SUR TRAIN

(30) Priority: 20.06.2019 JP 2019115009
(43) Date of publication of application: 27.04.2022
(73) Proprietor: Hitachi, Ltd., Tokyo 100-8280 (JP)
(72) Inventor: NAKAMURA, Tomohiko, Tokyo 100-8280 (JP); KOIKE, Jun, Tokyo 100-8280 (JP)
(74) Representative: MERH-IP Matias Erny Reichl Hoffmann Patentanwälte PartG mbB
(86) International application number: PCT/JP2020/016347
(87) International publication number: WO 2020/255547

(56) References cited:
- DE-A1- 102017 216 020
- DE-T5- 112016 001 432
- JP-A- 2000 121 658
- JP-A- 2016 005 920
- JP-A- H03 107 303
- JP-A- H10 206 185
- FUKUDA, MITSUYOSH I ET AL.: "Development of Train Location Detection Methods for Signalling", RTRI REPORT, vol. 27, no. 9, 2013, pages 17 - 22, XP055774552

## Description

### Technical Field

The present invention relates to a train protection system, a train protection control method, and a train on-board device.

### Background Art

Examples of a train protection system include a system that controls movement of a train under a block section. Protection systems of this type include a protection system based on fixed block and a protection system based on moving block. In the former, the block section is fixed, while in the latter, the block section moves with a train. Therefore, in the latter case, it is necessary to accurately grasp a moving distance of the train.

To detect the moving distance of the train, a speed of the train is obtained by detecting a rotation state (rotation speed) of a rotation system device (wheel, axle, or the like) of a vehicle since the train moves on a track by rolling a wheel. However, when a wheel slips on the track when the train is braked, and when a wheel idles on the track when the train runs at full speed, the speed of the train cannot be accurately calculated based on a detected value of the rotation system device. Furthermore, PTL 2 discloses moving body position calculating device for a moving body having a limited traveling route, wherein a wheel diameter information used for calculating the speed is automatically corrected by comparing the shape of the traveling road with a posture of the vehicle body. Eventually, PTL 3 discloses a method for determining the train position by integrally processing the outputs of a wheel tachometer and an accelerometer in a railway vehicle, wherein a slippage detection unit determines whether the wheel slips based on a shaft speed of a speed conversion device and an output of the acceleration correction unit.

Therefore, when the protection system detects that a wheel is slipping and that a wheel is idling, it is necessary to correct the speed of the train accordingly. For example, PTL 1 discloses a technique of a method for detecting wheel slip, which enables early detection of wheel slip even if a wheel slips again immediately after being adhered.

### Citation list

### Patent Literature

PTL 1: JP H0686404 A
PTL 2: JP H03107303 A
PTL 3: JP 2000 121 658 A

### Summary of Invention

### Technical Problem

Since wheel slip and wheel idling occur in the rotation system device, the speed (speed of the train) of the vehicle cannot be corrected with high accuracy even if an error or deviation in the speed of the train caused by the wheel slip and the wheel idling is to be eliminated based on the detected value of the rotation system device in the rotation state as in the related art. The invention has been made in view of the above-mentioned problem, and an object of the invention is to provide a train protection system capable of identifying a running speed of a vehicle with high accuracy even if a wheel slips or idles.

However, in the technique in PTL 1, since all of speed data is replaced with a maximum speed in the speed data when wheel slip is detected, the speed data is replaced with the maximum speed when slip or idling occurs even though the speed is not actually the maximum speed. Therefore, the speed data may deviate from an actual speed every time slip or idling occurs.

### Solution to Problem

The present invention is set out in the appended set of claims. Preferably embodiments are defined in the dependent claims.

### Advantageous Effect

According to the invention, it is possible to provide a train protection system capable of identifying a running speed of a vehicle with high accuracy even if a wheel slips or idles.

### Brief Description of Drawings

[FIG. 1] FIG. 1 is a block diagram showing an outline of a train protection system according to embodiments (a first embodiment and a second embodiment) of the invention.
[FIG. 2] FIG. 2 is a table showing a speed and an acceleration that are calculated internally by an on-board device in the train protection system in FIG. 1.
[FIG. 3] FIG. 3 is a time chart showing speed correction during slip by the train protection system according to the first embodiment of the invention.
[FIG. 4] FIG. 4 is a time chart showing speed correction during idling by the train protection system according to the first embodiment of the invention.
[FIG. 5] FIG. 5 is a time chart showing speed correction during slip by the train protection system according to the second embodiment of the invention.
[FIG. 6] FIG. 6 is a time chart showing speed correction during idling by the train protection system according to the second embodiment of the invention.
[FIG. 7] FIG. 7 is a flowchart showing an operation procedure of a train protection control method using the train protection system in FIG. 1.

### Description of Embodiments

First, terms are defined based on relevant provisions. A train is a vehicle constructed for the purpose of running on a railroad track outside a passenger stop. When operating as a train, the train is required to meet higher safety requirements as compared with a vehicle, and it is necessary to have a driver in the crew. In contrast, when unmanned driving is taken into consideration, a vehicle cannot be called a train, but may be called a vehicle or a vehicle body.

An automatic train control (ATC) is a type of signaling protection device in a railroad, and refers to a device having a function of displaying a signal indicating an allowable driving speed of a train in the train according to a distance from a preceding train and route conditions, and decreasing a speed of the train by an automatic action according to the display of the signal.

In the general interpretation in the related art of the disclosure in the present application, a train protection system refers to a system that includes at least a train on-board device (hereinafter, also simply referred to as "on-board device") and a ground device and that implements safe operation by a control device such as an ATC.

A train protection system disclosed in the present application has been advanced for higher accuracy with implementation of a dense train timetable and automatic unmanned driving taken into consideration in the general train protection system described above. In unmanned driving, the system is sometimes called a vehicle instead of a train according to the provisions of laws and regulations, but here, the system is called a train protection system since the system satisfies advanced safety requirements including unmanned driving.

A train on-board device (on-board device) disclosed in the present application refers to a control device mounted on a vehicle to safely operate the vehicle based on at least an on-rail position X and a speed V. The on-board device can be implemented even if the on-board device does not necessarily have a function of receiving .(transmitting and receiving) protection information Y with a ground element as defined above. The on-board device is generally implemented by software in which a computer including a central processing unit (CPU)and a memory executes a program stored in the memory, and may be implemented by hardware by being designed with an integrated circuit or the like.

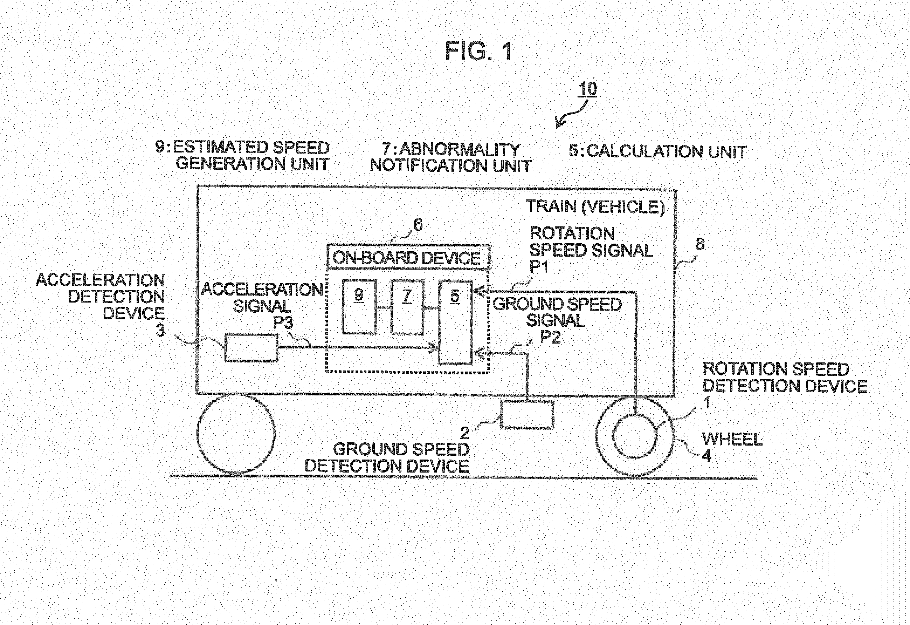

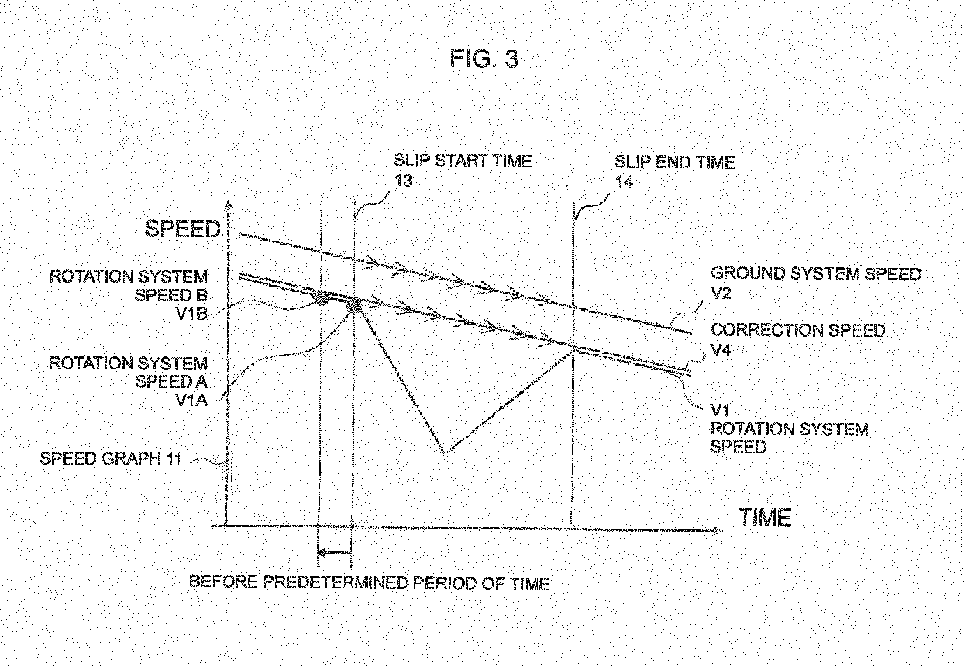

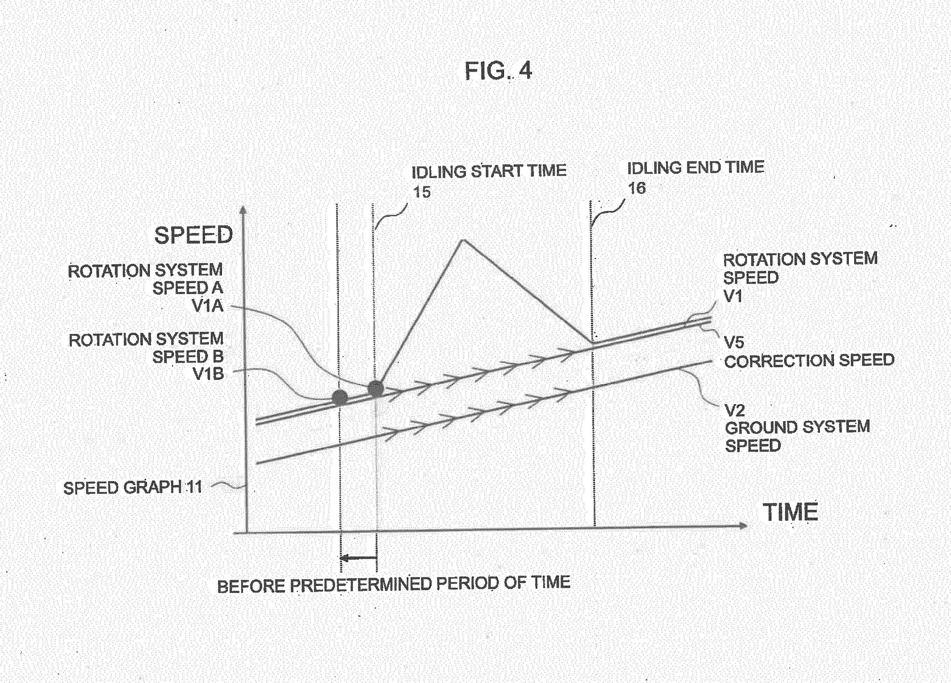

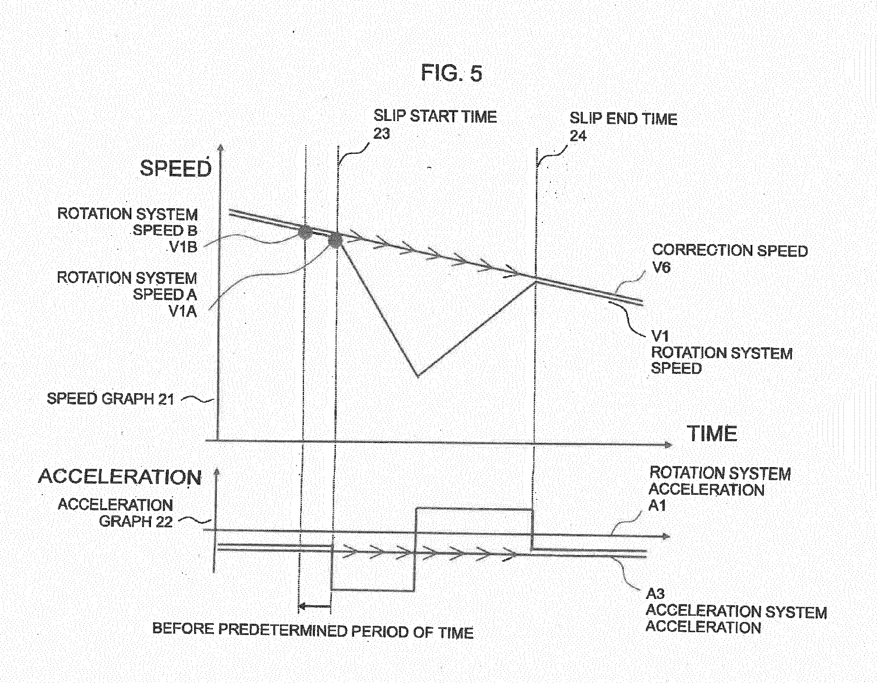

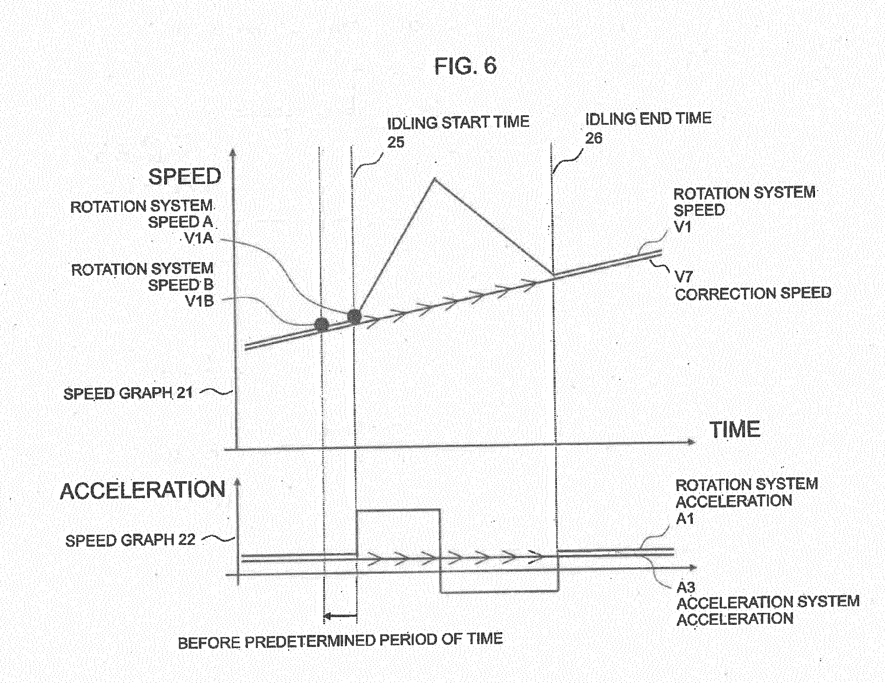

Examples of embodiments of the invention will be described below with reference to the drawings. The entire contents of the embodiments according to first and second embodiments of the invention are shown in FIGS. 1, 2, and 7. The first embodiment is shown in FIGS. 3 and 4. The second embodiment is shown in FIGS. 5 and 6. In the following description, the train protection system will be abbreviated as "the present system". Similarly, a train protection control method is abbreviated as "the present method".

### First Embodiment

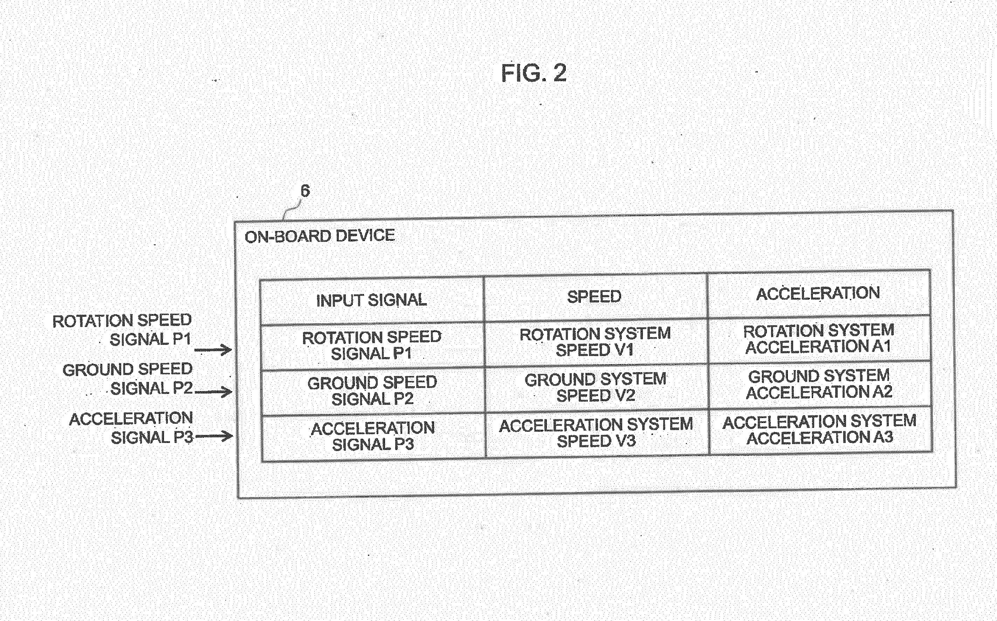

FIG. 1 is a block diagram showing an outline of the present system. FIG. 2 is a table showing a speed and an acceleration that are calculated internally by an on-board device 6 in the present system in FIG. 1. The present system 10 supports safe driving of a vehicle 8 using protection information Y (not shown) including information on at -least one of an on-rail position X (not shown) and a speed V in a moving block section. The present system 10 • includes the vehicle 8, a rotation speed detection device (first device) 1, a ground speed detection device (second device) 2, an acceleration detection device (second device) 3, a calculation unit 5, the on-board device 6, an abnormality -notification unit 7, and an estimated speed generation unit 9.

The vehicle 8 is a railroad vehicle including a wheel 4. The rotation speed system detection device 1 detects a rotation speed of the wheel 4 or an axle to generate a rotation speed signal P1. The rotation speed signal P1 is input to the on-board device 6 that controls a train. The first device 1 is the rotation speed detection device 1 derived from the wheel 4. The second devices 2 and 3 do not need to be the ground speed detection device 2 or the acceleration detection device 3 as long as the second devices 2 and 3 are vehicle speed detection units that are not derived from rotation of the wheel 4. The ground speed system detection device (second device) 2 generates a ground speed signal P2 for detecting a relative speed between the train, and the ground.

The rotation speed signal P1 can be converted into a first system speed V1 for expressing the running speed V of the vehicle 8. The ground speed signal P2 can also be converted into a second system speed V2 for expressing the running speed V of the vehicle 8. The rotation speed signal P1 and the ground speed signal P2 are not the same since principles of signal detection are different, but it is possible to obtain the speed V with higher accuracy using both the rotation speed signal P1 and the ground speed signal P2. The calculation unit 5 obtains differences between the first system speed V1 and the second system speeds V2 and V3 and changes in the differences. When the change in the difference exceeds a threshold, the abnormality notification unit 7 determines that an abnormal situation of at least one of idling or slip of the wheel 4 has occurred (started). In contrast, when the difference returns to a value equal to or less than the threshold, the abnormality notification unit 7 determines that the abnormal situation has ended.

The estimated speed generation unit 9 can switch a current estimated speed used for train control depending on whether an abnormal situation notified by, the abnormality notification unit 7 has occurred. The estimated speed generation unit 9 performs switching according to the following rules.

The first system speed V1 is set as the current estimated speed at least before a predetermined period of time ahead of an abnormal situation and after the abnormal situation ends.

During a period from a time before a predetermined period of time ahead of an abnormal situation to the end of the abnormal-situation, or during the abnormal situation, a correction speed V4 obtained by correcting the first system speed V1 with the second system speeds V2 and V3 is set as the current estimated, speed. The correction referred to here is a process for improving accuracy.

The present system 10 applies a principle of detecting an abnormality such as idling, slip, or re-adhesion from a phenomenon that the rotation speed of the wheel 4 suddenly changes. The first device 1 outputs the first system speed V1 of the vehicle 8 based on a first event corresponding.to the rotation of the wheel 4 of the vehicle 8. Therefore, by monitoring the first system speed V1, the system 10 can detect the phenomenon that the rotation speed of the wheel 4 suddenly changes, and can detect the abnormality such as idling, slip, or re-adhesion.

The ground speed system detection device (second device) 2 generates the ground speed signal P2 for detecting the relative speed between the vehicle 8 and the ground. The ground speed signal P2 is input to the on-board device 6 that controls the vehicle 8. The ground speed system detection device 2 irradiates, for example, the ground or an object with an electromagnetic wave, and obtains the ground speed signal P2 based on a reflected wave. That is, the second device 2 uses, as a ground speed of the vehicle 8, the second system speed V2 obtained by applying a Doppler effect which is a second event different from the first event.

The Doppler effect is a second event that has little direct relation with the first event corresponding to the rotation of the wheel 4. As a wave .of the Doppler effect, for example, an electromagnetic wave in a millimeter-wave band can be used, and an electromagnetic wave in a band other than the millimeter-wave band can also be applied.

The present system 10 has an effect of obtaining the speed V with high accuracy by combining the first device 1 based on the first event and the second device 2 based on the second event. The ground speed signal P2 may be a signal related to an amount of a physical change detected by the ground speed system detection device (second device) 2. Further, the ground speed signal P2 may be information converted into the vehicle speed V in the ground speed system detection device 2. The acceleration system detection device 3 that detects, the acceleration of the vehicle , 8 generates an acceleration signal P3, and inputs the acceleration signal P3 to the on-board device 6 that controls the vehicle 8.

As shown in FIG. 2, the rotation speed signal P1, the ground speed signal P2, and, the acceleration signal P3 are input to the on-board device 6. These signals are obtained from different types of sensors, and the speed and the acceleration are calculated based on these signals. The vehicle speed V1 is calculated.based on information such as the rotation speed signal P1 and a diameter of the wheel 4. The vehicle speed V1 is referred to as a rotation system vehicle speed (hereinafter, also referred to as a "rotation system speed") V1. The acceleration is calculated based on the rotation system speed V1 and is used as _a rotation system acceleration A1.

When the ground speed signal P2 is a signal related to the amount of a physical change detected by the ground speed system detection device 2, the vehicle speed is calculated in the on-board device 6. Alternatively, when the ground speed signal P2 is converted to indicate a vehicle speed V2, the value of the -ground speed signal P2 is set as the vehicle speed V2. The vehicle speed V2 is used as a ground system speed V2.

The acceleration is calculated based on the ground system speed V2 and is.used.as a ground system acceleration A2. A vehicle speed V3 is calculated based on the acceleration signal P3. The vehicle speed V3 is used as an acceleration system speed V3. An acceleration A3 obtained based on the acceleration signal P3 is used as an acceleration system acceleration A3. An operation of the present system 10 will be described below with reference to FIGS. 3 to 6. The following process is performed by the on-board device 6.

FIG. 3 is a time chart showing speed correction during slip by the present system 10 according to the first embodiment of the invention. The time chart in FIG. 3 is basically a speed graph 11, in which the verticalaxis shows the speed, and the horizontal axis shows the time. The speed graph 11. in. FIG. 3 shows the rotation system speed V1, the ground system speed V2, and a correction speed V4. The present system 10 obtains the correction speed V4 based on the rotation system speed V1 and the ground system speed V2.

A slip start time 13 and a slip end time 14 when slip detection is executed based -on, for example, an acceleration, a deceleration, and the like of the vehicle 8 are shown. A speed of the rotation system speed V1 at the slip start time 13 is referred to as a rotation system speed V1A, and the rotation system speed V1 before a predetermined period of time ahead of the slip start time 13 is referred to as a rotation system speed V1B.

In the present system 10, when it is determined that slip has occurred at the slip start time 13, a speed change in the ground speed signal V2 is added to the rotation system speed V1A or the rotation system speed V1B to calculate the correction speed V4. The reason for executing correction back to a time before a predetermined period of time ahead of determination based on the slip start time 13 is to cause the on-rail position X of the vehicle 8 in the moving block section to be more accurate. The on-board device 6 controls the vehicle 8 using the rotation system speed V1, the ground system speed V2, and the correction speed V4.

For example, the on-board device 6 uses the rotation system speed V1 for the train control before the slip start time 13, uses the correction speed V4 for the train control after the slip start time 13 or from a time before a predetermined period of time ahead of the slip start time 13, and uses the rotation system speed V1 for the train control after the slip end time 14. As a result, an influence of slip can be reduced as compared.with a case in which only the rotation system speed V1 is used for the train control.

The influence of slip refers to an influence on the accuracy of the protection information, Y, which is indispensable for safely operating the vehicle 8 under a signal system due to moving block. The protection information Y includes information on at least one of the on-rail position X and the speed V of the vehicle 8 in the moving block section. It is important to maintain the protection information Y with high accuracy to safely operate the vehicle 8.

Therefore, the present system 10 corrects the running speed V of the vehicle 8 even in an abnormal time when the wheel 4 idles or slips, as in a normal time when the wheel 4 does not idle or slip. If the corrected running speed V is accurate, the on-rail position X of the vehicle 8 in the moving block section is also accurate. Therefore, inter-vehicle distances between a plurality of vehicles 8 can be shortened, which can contribute to the dense timetable, and also contributes to automatic driving.

FIG. 4 is a time chart showing speed correction during idling by the present system 10 according to the first embodiment of the invention. A difference of the speed correction during idling shown in FIG. 4 from the speed correction during slip shown, in FIG. 3 is as follows. Idling generally occurs when a train runs at full speed, and thus, the speed in the speed graph 11 increases to the right. FIG. 4 is different from FIG. 3 showing the slip detection in that the rotation system vehicle speed V1 temporarily and rapidly increases when the train idles.

A common point between the speed correction during slip shown in FIG. 3 and the speed correction- during idling shown in FIG. 4 is as follows. That is, a speed correction method during idling by the present system 10 is common in that the speed change in the ground speed signal V2 is added to the rotation system speed V1A or the rotation system speed V1B to calculate a correction speed V5 at an idling start time 15, as in the case in FIG. 3.

### Second Embodiment

FIG. 5 is a time chart showing speed correction during slip by a train protection system according to a second embodiment of the invention. The horizontal axis of FIG. 5 represents the time, and two different graphs sharing this time axis are separately shown in order from the top of the vertical axis. The graphs are a speed graph 21 and an acceleration graph 22.

The speed graph 21 in FIG. 5 shows the rotation system speed V1 and a correction speed V6. The acceleration graph 22 in FIG. 5 shows the rotation system acceleration A1 and the acceleration system acceleration A3. In the acceleration graph 22, the vertical axis shows the acceleration and the horizontal axis shows the time. The present system 10 obtains the correction speed V6 based on the rotation system speed V1 and the acceleration system acceleration A3.

A slip start time 23 and a slip end time 24 when slip detection is executed based on an acceleration, a deceleration, and the like of the vehicle 8 are shown. The speed of the rotation system speed V1 at the slip start time 23 is referred to as the rotation system speed V1A, and the rotation system speed V1 before a predetermined period of time ahead of the slip start time 23 is referred to as the rotation system speed V1B.

In the present system 10, when it is determined that slip has occurred at the slip start time 23, an acceleration change in the acceleration system acceleration A3 is added to the rotation system speed V1A or the rotation system speed V1B to calculate the correction speed V6. The reason for executing correction back to a time before a predetermined period of time ahead of determination based on the slip start time 23 is to cause the on-rail position X of the vehicle 8 in the moving block section to be more accurate. The on-board device 6 controls the vehicle 8 using the rotation system speed V1, the acceleration system acceleration A3, and the correction speed V6.

In the present system 10, when the time is determined to be the slip start time 23, the correction speed V6 is calculated by decelerating the rotation system speed V1A or the rotation system speed V1B with the acceleration system acceleration A3. Accordingly, the on-board device 6 controls the train using the rotation system speed V1 and the correction speed V6.

For example, the on-board device 6 can reduce the influence of slip as compared with the case in which only the rotation system speed V1 is used for the train control using the rotation system speed V1 for the train control before the slip start time 23, using the correction speed V6 for the train control from the slip start time 23, and using the rotation system speed V1 for the train control after the slip end time 24 or before and after a predetermined period of time with respect to the slip end time 24.

FIG. 6 is a time chart showing speed correction during idling by the present system 10 according to the second embodiment of the invention. A difference of the speed correction during idling shown in FIG. 6 from the speed correction during slip shown in FIG. 5 is as follows. Idling generally occurs when a train runs at full speed, and thus, the speed in the speed graph 21 increases to the right. FIG. 6 is different from FIG. 5 showing the slip detection in that the rotation system vehicle speed V1 temporarily and rapidly increases when the train idles.

A common point between the speed correction during slip shown in FIG. 5 and the speed correction during idling shown in FIG. 6 is as follows. That is, the speed correction method during idling by the present system 10 is common in that a correction speed V7 is calculated by accelerating the rotation system speed V1A or the rotation system speed V1B with the acceleration system acceleration A3 at an idling start time 25, as in the case in FIG. 5.

According to the present system 10, it is possible to more safely operate the vehicle 8 by preventing a large discrepancy between the actual vehicle speed V when idling or slip occurs and the current estimated speed used by the on-board device 6 to control the vehicle 8 and by executing speed estimation with high accuracy.

### [Supplement] -

As described above, the present system 10 adds the amount of a speed change obtained based on the ground system speed V2 or the acceleration system speed V3 to the rotation system speed V1 obtained based on the rotation of the wheel 4 before idling or slip occurs. The graphs shown in FIGS. 3 to 6 show the abnormalities in an extremely conspicuous manner to describe the present system 10 according to the first and second embodiments.

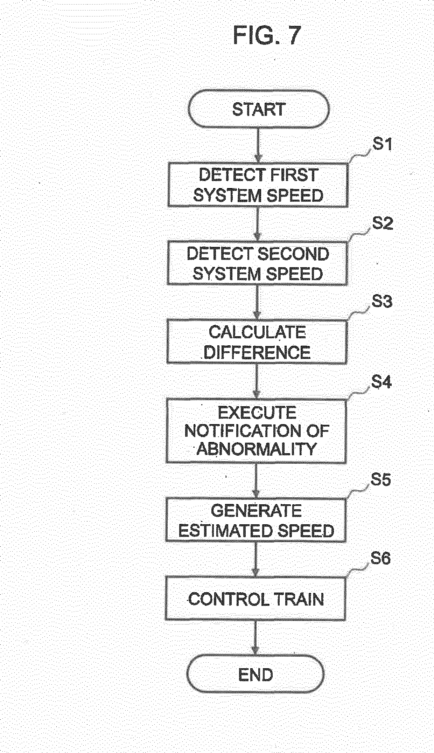

However, in FIGS. 3 to 6, the actual present system 10 responds instantly as soon as a small change is detected, and thus processes are executed within a range that cannot be felt by humans. Due to this instant response, the present system 10 repeatedly and continuously, executes processes of a first system speed detection step S1 to an abnormality notification step S4 in FIG. 7 at a frequency of approximately 100 times per second, and executes processes of an estimated speed generation step S5 and a train control step S6 as appropriate.

The invention is not limited to the first and second embodiments described above, and includes various modifications. For example, the above-mentioned embodiments have been described in detail to describe the invention in an easy-to-understand manner, and are not necessarily limited to those having all the described configurations. The above-mentioned configurations, functions, processing units, and the like may be implemented, by hardware by designing a part or all of the configurations, functions, processing units, and the like with, for example, an integrated circuit.

Further, the above-mentioned configurations, functions, and the like may be implemented by software by a processor interpreting and executing a program for implementing the functions. Information such as a program, a table, and a file for implementing the functions may be stored in a storage device such as a memory, a hard disk, or a solid state drive (SSD), or a recording medium such as an IC card, an SD card, or a DVD.

The present system 10 can be summarized as follows.
[1] The present system 10 includes the vehicle 8, the control device 6, the first device 1, and the second devices 2 and 3, and supports safe driving of the vehicle 8. In FIG. 1, the rotation speed detection device 1 refers to the first device 1, and the ground speed detection device 2 and the acceleration detection device 3 refer to the second devices 2 and 3.

The first device 1 detects rotation of at least one of the wheel 4 and an axle of the wheel 4 to generate speed information, and inputs the speed information as a first detected value (rotation speed signal in FIG. 2) P1 to the control device 6. The second devices 2 and 3 input second detected values P2 and P3 obtained by detecting the speed (the ground system speed V2 and the acceleration system speed V3 in FIG. 2) of the vehicle 8 or the acceleration (the ground system acceleration A2 and the acceleration system acceleration A3 in FIG. 2) of the vehicle 8 to the control device 6. P2 is the ground speed signal in FIG. 2, and P3 is the acceleration signal in FIG. 2.

When the control device 6 detects that the wheel 4 slips or idles, the control device 6 controls movement of the vehicle 8 based on the corrected speed information when the wheel 4 slips or idles. The corrected speed information is obtained by correcting, based on the second detected values P2 and P3, the speed detected value P1 obtained from the first device 1. More details are as follows.

The control device 6 controls the movement of the vehicle 8 based on a block section and the on-rail position X of the vehicle 8 in the block section. The first device 1 detects the rotation of at least one of the wheel 4 and the axle of the wheel 4 as the first detected value P1, and inputs the first detected value P1 to the control device 6. The second devices 2 and 3 input the second detected values P2 and P3 obtained by detecting a moving state of the vehicle 8 to the control device 6..

The control device 6 calculates the speed V1 of the vehicle 8 based on the first detected value P1. The control device 6 can also calculate a moving distance L of the vehicle 8 by integrating the speed, V1 with the time. The control device 6 can also calculate the on-rail position X of the vehicle 8 based, on the moving distance L. On the other hand, the control device 6 detects slip or idling of the wheel 4 based on the first detected value P1. If slip or idling is detected, the speed V1 of the vehicle 8 is corrected based on the second detected values P2 and P3 while the wheel 4 slips or idles as described above.

The rotation speed detection device (first device) 1 outputs the rotation system speed V1 of the vehicle 8 based on the first event corresponding to the rotation of the wheel 4 of the vehicle 8. By monitoring the rotation system speed V1, it is possible to detect the phenomenon that the rotation speed of the wheel 4 suddenly changes. Therefore, the principle of detecting idling, slip, or re-adhesion based on the phenomenon that the rotation speed of the wheel 4 suddenly changes can be applied.

However, in this principle, when the rotation speed of the wheel 4 under monitoring changes slowly, it is difficult to reliably detect the abnormality such as idling, slip, or re-adhesion according to the detection method in the related art. In this case, if the rotation system speed V1 of the vehicle 8 in operation actually changes according to a driving operation of starting acceleration or braking stop, the phenomenon is not idling or slip and is naturally not re-adhesion.

Alternatively, even if the wheel 4 slightly idles or slips, it is difficult to reliably determine the change. Therefore, the present system 10 can detect the speed V of the vehicle 8 with high accuracy together with information on the second system speeds V2 and V3 obtained from a system different from the rotation system speed V1.

The second devices 2 and 3 can output the second system speeds V2 and V3 of the vehicle 8 based on the second event different from the first event. That is, the second devices 2 and 3 are not directly related to the rotation of the wheel 4, and can mainly output the second system speeds V2 and V3. based on the second event closer to a state in which the vehicle 8 in operation actually starts acceleration or brakes and stops..

By monitoring the rotation system speed V1, it is possible to detect the phenomenon that the rotation speed of the wheel 4 suddenly changes. The second system speeds V2 and V3 can accurately express the speed change related to an actual driving state of the vehicle 8 as compared with the rotation system speed V1 even in the abnormal situation in which the vehicle 8 idles or slips.

The control device 6 calculates the speed V1 of the vehicle 8 based on the first detected value P1. On the other hand, the control device 6 detects slip or idling of the wheel 4 based on the first detected value P1. If slip or idling is detected, the speed V1 of the vehicle 8 is corrected based on the second detected values P2 and P3 while the wheel 4 slips or idles as described above. The corrected speeds. V4 to V7 are highly accurate.

Therefore, the present system 10 can identify the running speed of the vehicle 8 with high accuracy even if the wheel 4 slips or idles. The present system 10 can also calculate the moving distance L of the vehicle 8 by integrating the speed V with the time. The present system 10 can also calculate the on-rail position X of the vehicle 8 based on the moving distance L. As a result, it is possible to implement safe driving corresponding to the moving block.

[2] When the control device 6 detects that the wheel 4 slips or idles, the control device 6 corrects the speed information by adding an acceleration or deceleration of a speed obtained by the second devices 2 and 3 to a speed obtained based on the first detected value P1. The "speed obtained based on the first detected value" may be a speed indicated by the first detected value or a speed calculated based on a value indicated by the first detected value.

In this regard, the description will be made by giving an example of a speed change from the slip start time 13 to the slip end time 14 as shown in FIG. 3. During, this period, the rotation system speed V1 rapidly decreases as the wheel 4 slips. In this case, a stable downward slope of the ground system speed V2 obtained by the second device (ground speed detection device) 2 is estimated to be more accurate. The speed information is corrected by adding, as the correction speed V4, a decrease in a speed indicated by the downward slope to the rotation system speed V1. As a result, the safe driving can be implemented with more accuracy. FIG. 4 shows the case of idling,

[3] When the control device 6 detects that the wheel 4 slips or idles, the control device 6 corrects the speed information by adding the acceleration or deceleration' of the speed obtained by the second devices 2 and 3 to the speed V1B obtained based on the first detected value P1 before the wheel 4 slips or idles.

In this regard, as shown in FIG. 3, the rotation system speed V1B based on the first detected value P1 is obtained before a predetermined period of time ahead of the slip start time 13, and the rotation system speed V1B is estimated to be accurate. The speed information is corrected by adding, as the correction speed V4, the decrease in the speed indicated by the stable downward slope of the ground system speed V2 obtained by the second device 2 (ground speed detection device) to the accurate rotation system speed V1. As a result, the safe driving can be implemented with more accuracy. FIG. 4 also shows the case of idling in this case,

[4] When the control device 6 detects that the wheel 4 slips or idles, the control device 6 corrects the speed information with the rotation system speed V1 obtained based on the first detected value P1 changing with the acceleration system acceleration A3 obtained by the second device 3.

In this regard, the description will be made by giving an example of a speed change from the idling start time 25 to the idling, end time 26 as shown in FIG. 6. During this period, the rotation system speed V1 rapidly increases as the wheel 4 idles. In this case, the constant and stable acceleration system acceleration A3 obtained by the second device (acceleration detection device) 3 is estimated to be more accurate. The speed information is corrected with the acceleration system acceleration A3 regarded as accurate with respect to the rotation system speed, V1 that rapidly increases. As a result, the safe driving can be realized with more accuracy. In the case of idling, since the same effect can be attained except that the speed change is opposite, the description thereof will be omitted.

[5] When the control device 6 detects that the wheel 4 slips or idles, the control device 6 corrects the speed information with the speed, which is the first detected value before the wheel 4 slips or idles, changing with the acceleration obtained by the second device while the wheel 4 slips or idles.

In this regard, the description will also be made by giving an example of the speed change from the idling start time 25 to the idling end time 26 as shown in FIG. 6. The speed V1B obtained based on the first detected value P1 before a predetermined period of time ahead of a time when the wheel 4 idles, and the subsequent speed V1A are accurate. The rotation system speed V1 that rapidly increases from the idling start time 25 to the idling end time 26 has many errors. Inview of this, the speed information is corrected with the acceleration system acceleration A3 which is regarded as accurate. Since the acceleration system acceleration A3 regarded as accurate is constant and continues, at a constant acceleration,the speed information is corrected by linearly extending an upward slope of the speed V1B and the subsequent speed V1A. As a result, the safe driving can be implemented with more accuracy. A description of slip is also omitted in this case.

[6] The control device 6 is preferably a train on-board device 6 that is mounted on the vehicle 8 and that controls the vehicle 8 based on the protection information Y including at least information on the speed V, It is preferable that the train on-board device 6 further includes the calculation unit 5, the abnormality notification unit 7, and the estimated speed generation unit 9, or is connected so as to send and receive a control signal. The calculation unit 5, the abnormality notification unit 7, and the estimated speed generation unit 9 described above do not need to be built in the on-board device 6, and may be disposed anywhere as long as the calculation unit 5, the abnormality notification unit 7, and the estimated speed generation unit 9 are functionally connected to the on-board device 6.

The calculation unit 5 obtains the differences between the first system speed V1 based on the first detected value P1 and the second system speeds V2 based on the second detected values P2 and P3, and change amounts in the differences. When the change, amount in the difference exceeds.the threshold, the abnormality notification unit 7 determines that an abnormal situation of at least one of idling or slip of the wheel 4 has occurred, and executes notification of a determination result such that the determination result is reflected in the control of the vehicle 8. The estimated speed generation unit 9 can switch the current estimated speed used for the control of the vehicle 8 depending on whether an abnormal situation notified by the abnormality notification -unit 7 has occurred.

The estimated speed generation unit 9 executes switching according to the following rules.

The first system speed V1 is set as the current estimated speed at least before a predetermined period of time ahead of a time when an abnormal situation occurs and after the abnormal situation ends.

From a time before a predetermined period of time ahead of an abnormal situation to the end of the abnormal situation, or during the abnormal situation, the correction speeds V4 to V7 obtained by correcting the rotation system speed V1 with the secondsystem speeds V2 and V3 are set as the current estimated speeds.

Here, the calculation unit 5 obtains the differences between the rotation system speed V1 and the second system speeds V2 and V3 and the change amounts-in the differences. For a difference V1 - V2 or a difference V1 - V3, the change due to the starting acceleration or braking stop phenomenon (normal acceleration and deceleration phenomenon) according to the driving operation is excluded from the change in the rotation system speed V1 due to an abnormal phenomenon. As a result, when the rotation speed of the wheel. 4 under monitoring changes slowly, it is possible to detect only the abnormal phenomenon when a small change such as idling, slip, or re-adhesion occurs.

When the change amount in the difference exceeds the threshold, the abnormality. notification unit 7 determines that an abnormal situation of at least one of idling or slip of the wheel 4 has occurred (started). In contrast, when the change amount in the difference again falls the threshold, the abnormality notification unit 7 determines that the abnormal situation has ended (recovered) by re-adhesion from the state of idling or slip. The abnormality notification unit 7 notifies the estimated speed generation unit 9 of the on-board device 6 of these determination results.

The on-board device 6 is mounted on the vehicle 8 and controls the train based on the protection information Y. Functions, actions, and effects of the on-board device 6 will be described. At present, the on-rail position X of the -vehicle 8 is obtained based on the first event corresponding to the rotation of the wheel 4 of the vehicle 8. Errors cannot be avoided at the on-rail position X if an abnormal situation such as idling or slip of the wheel 4 occurs.

However, the on-board device 6 of the present system 10 includes the first device 1 based on the first event corresponding to the rotation of the wheel 4, the second devices 2 and 3 based, on the second event having little direct relation with the first event, and the calculation unit 5 that obtains the change amount in the output difference V1 - V2 or the change amount in the output difference V1 - V3 between the first device 1 and the second devices 2 and 3. - The difference V1 - V2 and the difference V1 - V3 may both be opposite. That is, the difference V2 - V1 and the difference V3 - V1 may be used.

If the calculation unit 5 can obtain the change amount in the output difference, for the phenomenon that the rotation speed of the wheel 4 changes, it is possible to distinguish between aphenomenon which is a slight idling, slip, or re-adhesion, that is, an abnormal phenomenon and a normal phenomenon of no slip. The estimated speed generation unit 9 can switch the current estimated, speed used for the train control depending on whether an abnormal situation notified by the abnormality notification unit 7 has occurred.

Based on the principle of detecting idling, slip, or re-adhesion based on the phenomenon that the rotation speedof the wheel 4 suddenly changes, the present system 10 can detect the occurrence of an abnormality even when the change in the rotation speed is small. Therefore, it is possible to prevent a large discrepancy between the actual vehicle speed V when idling or slip occurs and. the current estimated speed used by the on-board device 6 to control the vehicle 8. As a result, it is possible to more safely operate the vehicle 8 by executing the speed estimation with high accuracy.

[7] The present system 10 preferably supports the safe driving of a train using the protection information Y including the information on the on-rail position X in the moving block section. The vehicle 8 is safely driven under the signal system of the moving block section using, for example, the protection information Y including the on-rail position X and the speed V, while a safe region to prevent a rear-end collision is ensured. The present system 10 can quickly detect the occurrence of an abnormality even when the change amount in the rotation speed of the wheel 4 is small. It is possible to reduce a deviation of the on-rail position X due to idling or slip of the wheel 4 if some kind of correction is promptly executed at the timing when a rapidly detected abnormal situation occurrence signal E (not shown) is obtained.As a result, safety can be further improved.

[8] The second device 2 uses, as the ground speed of the vehicle 8, the second system speed V2 obtained by applying the Doppler effect as the second event. The Doppler effect is the second event .that has little direct relation with the first event corresponding to the rotation of the wheel 4. Accordingly, the second system speed V2 having less speed error due to slip of the wheel 4 can be obtained.. The difference between the second system speed V2 and the rotation system speed V1 can also be obtained with high accuracy. Therefore, an effect of improving the accuracy of an abnormality detection function can be attained. The wave for attaining the Doppler effect is preferably an electromagnetic wave or a sound wave, and can be easily implemented.

[9] The second device 3 uses, as the second event, a change in the acceleration signal P3 detected by an acceleration, sensor 3 provided in the vehicle 8. Unlike the ground system speed V2, the acceleration system speed V3 generated by the acceleration sensor 3.can be generated inside a housing that is completely shielded, and sealed in visual from the outside air of the vehicle 8, and thus has an effect of providing great flexibility in design.

At this time, the calculation unit 5 can determine whether an abnormal situation has occurred by obtaining an acceleration difference between the rotation system acceleration (first system acceleration) A1 and the acceleration system acceleration (second system acceleration) A3 instead of the change amount in the difference between the rotation system speed (first system speed) V1 and the ground system speed (second system speed) V3 (FIGS. 5 and 6).

Since the relation between the acceleration and the speed can be converted by differentiating or integrating the acceleration and the speed with the time, an arithmetic process can be executed by executing a predetermined computer program or the like to obtain the difference by either the acceleration or the speed.

The train on-board device (on-board device) 6 according to the embodiment of the invention can be summarized as follows.

[10] The on-board device 6 is a control device 6. The control device 6 is mounted on the vehicle 8 that moves on a track with the wheel. 4 rolling, and supports the safe driving of the vehicle 8 by controlling the movement of the vehicle 8 based on a block section and the on-rail position X of the vehicle 8 in the block section. The on-board device 6 includes the first device 1 and the second device 2. The first device 1 detects the rotation of at least one of the wheel 4 and the axle of the wheel 4 as the first detected.value P1, and inputs the first detected value P1 to the control device 6. The second device 2 inputs the second detected values P2 and P3 obtained by detecting the moving state of the vehicle 8 to the control device 6. The functions, actions and effects of the control device 6 are as described in the above-mentioned [1].

The present method can be summarized as follows with reference to FIG. 7. FIG. 7 is a flowchart showing an operation procedure of a train protection control method (the present method) using the.present system in FIG; 1.

[11] In the present method, the train on-board device 6 mounted on the vehicle 8 controls, based on the protection information Y including at least the speed information V, the vehicle 8 that moves on a track with the wheel 4 rolling. As shown in FIG. 7, the present method includes the first system speed detection step S1, a second, system speed detection step S2, a difference calculation step S3, the abnormality notification step S4, an estimated speed generation step S5, and a train control step S6.

In the first, system speed detection step S1, the first device 1 detects the rotation of at least one of the wheel 4 and the axle of the wheel 4, and outputs the first system, speed V1. In the second system speed detection step S2, the second device 2 detects the moving state of the vehicle 8 and outputs the second system speed V2. In the difference calculation step S3, the difference between the first system speed V1 and the second system speed V2 is obtained by the difference calculation unit 5.

In the abnormality notification step S4, when the difference exceeds the threshold, the abnormality notification unit 7 determines that an abnormal situation of at least one of idling or slip of the wheel 4 has occurred, and notifies the train on-board device 6 of the abnormal situation occurrence signal E. In the estimated speed generation step S5, the estimated speed generation unit 9 switches the current estimated speed used for the train on-board device 6 depending on whether an abnormal situation has occurred. In the train control step S6, the train on-board device 6 controls the vehicle 8 using the current estimated speed.

In the estimated speed generation step S5, the on-board device 6 switches the current estimated speed used for the train control depending on whether an abnormal situation notified by the abnormality notification unit 7 has occurred. In the estimated speed generation step S5, the switching is executed according to the following rules.

The first system speed V1 is set as the current estimated speed at least before a predetermined period of time ahead of an abnormal situation and after the abnormal situation ends.

During a period from a time before a predetermined period of time ahead of an abnormal situation to the end of the abnormal situation, or during the abnormal situation, the correction speeds V4 to V7 obtained by correcting the rotation system speed V1 with the second system speeds V2 and V3 are set as the current estimated speeds.

In the train control step S6, the on-board device 6 controls the vehicle 8. using the abnormal situation occurrence signal E. Constituent requirements of .the present method are almost the same as those of the present system 10 in the above-mentioned [6], and effects of the constituent requirements are also the same. As described above, the present method includes the above-mentioned estimated speed generation step S5 as a method for the speed correction, and the estimated speed generation unit 9 switches the current estimated speed used for the train control depending on whether an abnormal situation notified by the abnormality notification unit 7 has occurred. As a result, it is possible to generate the protection information with higher accuracy to support the safe driving of the vehicle 8.

[12] In the present method in the above-mentioned [11], when the difference returns to a value equal to or less than the threshold after the difference exceeds the threshold and an abnormal situation occurs, the abnormality notification unit 7 determines that the abnormal situation has ended. It can be clarified that during the period from the occurrence of an abnormal situation of at least one of idling or slip of the wheel 4 to the end of the abnormal situation by re-adhesion, some kind of correction is necessary for the on-rail position X obtained based on the rotation of the wheel 4 of the vehicle 8.

### Reference Sign List

1 rotation speed system detection device (rotation speed detection device)
2 ground speed system detection device (second device)
3 acceleration system detection device (second device)
4 wheel
5 difference calculation unit
6 train on-board device (on-board device)
7 abnormality notification unit
8 train (vehicle)
9 estimated speed generation unit
10 train protection system (present system)
11 speed graph
13 slip start time
14 slip end time
15 idling start time
16 idling end time
21 speed graph
22 acceleration graph
23 slip start time
24 slip end time
25 idling start time
26 idling end time
A1 rotation,system acceleration
A2 ground system acceleration
A3 acceleration system acceleration
E abnormal situation occurrence signal
P1 rotation speed signal
P2 ground speed signal
P3 acceleration signal
V1 rotation system speed
V1A rotation system speed A
V1B rotation system speed B
V2 ground system speed (second system speed)
V3 acceleration system speed (second system speed)
V4 to V7 correction speed

## Claims

1. A train protection system (10) including a control device (6) configured to control movement of a vehicle (8) moving on a track with a wheel (4) rolling, the train protection system (10) comprising:
a first device (1) configured to detect rotation of at least one of the wheel (4) and an axle of the wheel (4) to generate speed information and to input the speed information as a first detected value (P1) to the control device (6); and
a second device (2, 3) configured to input, to the control device (6), a second detected value (P2, P3) obtained by detecting a speed or an acceleration of the vehicle (8), wherein
when the control device (6) detects that the wheel (4) slips or idles, the control device (6) corrects, based on the second detected value (P2, P3), a speed detected value obtained from the first device (1) and controls the movement of the vehicle (8) based on the corrected speed information while the wheel (4) slips or idles, **characterized in that**,
when the control device (6) detects that the wheel (4) slips or idles, the control device (6) corrects the speed information by adding an acceleration or deceleration of a speed obtained by the second device (2, 3) to a speed obtained based on the first detected value (P1).

2. The train protection system (10) according to claim 1, wherein
when the control device (6) detects that the wheel (4) slips or idles, the control device (6) corrects the speed information by adding an acceleration or deceleration of the speed obtained by the second device (2, 3) to a speed obtained based on the first detected value (P1) before the wheel (4) slips or idles.

3. The train protection system (10) according to claim 1, wherein
when the control device (6) detects that the wheel (4) slips or idles, the control device (6) corrects the speed information with a speed obtained based on the first detected value (P1) changing with an acceleration obtained by the second device (2, 3).

4. The train protection system (10) according to claim 1, wherein
when the control device (6) detects that the wheel (4) slips or idles, the control device (6) corrects the speed information with a speed, which is obtained based on the first detected value (P1) before the wheel (4) slips or idles, changing with an acceleration obtained by the second device (2, 3) while the wheel (4) slips or idles.

5. The train protection system (10) according to claim 1, wherein
the control device (6) is a train on-board device that is mounted on the vehicle (8) and that controls the vehicle (8) based on protection information including at least the speed information,
the train on-board device (6) further includes:
a calculation unit (5) configured to obtain a change amount in a difference between a first system speed based on the first detected value (P1) and a second system speed based on the second detected value (P2, P3);
an abnormality notification unit (7) configured to determine that an abnormal situation of at least one of idling or slip of the wheel (4) has occurred when the change amount in a difference exceeds a threshold, and execute notification of a determination result so as to reflect the determination result in control of the vehicle (8); and
an estimated speed generation unit (9) configured to generate a current estimated speed used for the control of the vehicle (8) depending on whether the abnormal situation notified by the abnormality notification unit (7) has occurred, or the train on-board control device (6) is connected so as to send and receive a control signal, and
the estimated speed generation unit (9) executes switching according to the following rules that
the first system speed is set as the current estimated speed at least before a predetermined period of time ahead of the abnormal situation and after the abnormal situation ends, and
during a period from a time before a predetermined period of time ahead of the abnormal situation to the end of the abnormal situation, or during the abnormal situation, a correction speed obtained by correcting the first system speed with the second system speed is set as the current estimated speed.

6. The train protection system (10) according to claim 5 configured to support safe driving of the vehicle (8) using the protection information including on-rail position information in a moving block section.

7. The train protection system (10) according to claim 5, wherein
the second device (2, 3) uses, as the second system speed, a ground speed of the vehicle (8) obtained by applying a Doppler effect, and
a wave for attaining the Doppler effect is an electromagnetic wave or a sound wave.

8. The train protection system (10) according to claim 5, wherein
the second device (2, 3) uses a change in an acceleration signal detected by an acceleration sensor provided in the vehicle (8), and
the calculation unit (5) is also capable of determining whether the abnormal situation has occurred by obtaining an acceleration difference between a first system acceleration and a second system acceleration instead of the change amount in a difference between the first system speed and the second system speed.

9. A train on-board control device (6) that is mounted on a vehicle (8) moving on a track with a wheel (4) rolling and that controls running of the vehicle (8) based on a block section and an on-rail position of the vehicle (8) in the block section, wherein
the train on-board control device (6)
acquires a first detected value (P1) obtained by a first device (1) configured to detect rotation of at least one of the wheel (4) and an axle of the wheel (4), and a second detected value (P2, P3) obtained by a second device (2, 3) configured to detect a moving state of the vehicle (8),
calculates a speed of the vehicle (8) based on the first detected value (P1),
calculates a moving distance of the vehicle (8) based on the speed,
calculates the on-rail position of the vehicle (8) based on the moving distance,
detects slip or idling of the wheel (4) based on the first detected value (P1), and
corrects, when the slip or idling is detected, the speed of the vehicle (8) during the slip or idling based on the second detected value (P2, P3), wherein
the train on-board control device (6) corrects the speed by adding an acceleration or deceleration of a speed obtained by the second device (2, 3) to a speed obtained based on the first detected value (P1).

10. A train protection control method in which a train on-board control device (6) mounted on a vehicle (8) moving on a track with a wheel (4) rolling controls the vehicle (8) based on protection information Y including at least speed information V, the train protection control method comprising:
a first system speed detection step of a first device (1) detecting rotation of at least one of the wheel (4) and an axle of the wheel (4) and outputting a first system speed;
a second system speed detection step of a second device (2, 3) detecting a moving state of the vehicle (8) and outputting a second system speed;
a difference calculation step of a difference calculation unit (5) obtaining a change amount in a difference between the first system speed and the second system speed;
an abnormality notification step of an abnormality notification unit (7) determining that an abnormal situation of at least one of idling or slip of the wheel (4) has occurred when the change amount in a difference exceeds a threshold, and notifying the train on-board control device (6) of an abnormal situation occurrence signal;
an estimated speed generation step of an estimated speed generation unit (9) switching a current estimated speed used in the train on-board device (6) depending on whether the abnormal situation has occurred; and
a train control step of the train on-board control device (6) controlling the vehicle (8) using the current estimated speed, wherein
in the estimated speed generation step, switching is executed according to the following rules that
the first system speed is set as the current estimated speed at least before a predetermined period of time ahead of the abnormal situation and after the abnormal situation ends, and
during a period from a time before a predetermined period of time ahead of the abnormal situation to the end of the abnormal situation, or during the abnormal situation, a correction speed obtained by correcting the first system speed with the second system speed is set as the current estimated speed, wherein
when train on-board control device (6) detects that the wheel (4) slips or idles, the train on-board device (6) corrects a speed information by adding an acceleration or deceleration of a speed obtained by the second device (2, 3) to a speed obtained based on the first detected value (P1).

11. The train protection control method according to claim 10, wherein
when the change amount in a difference returns to a value equal to or less than the threshold after the difference exceeds a threshold and the abnormal situation occurs, the abnormality notification unit (7) determines that the abnormal situation has ended.

## Patentansprüche

1. Zugschutzsystem (10) mit einer Steuervorrichtung (6), die konfiguriert ist, um die Bewegung eines Fahrzeugs (8) zu steuern, das sich auf einer Spur bewegt, wobei ein Rad (4) rollt, wobei das Zugschutzsystem (10) umfasst:
eine erste Vorrichtung (1), die konfiguriert ist, um die Drehung des Rads (4) und/oder einer Achse des Rads (4) zu erfassen, um Geschwindigkeitsinformationen zu erzeugen und um die Geschwindigkeitsinformationen als einen ersten erfassten Wert (P1) in die Steuervorrichtung (6) einzugeben; und
eine zweite Vorrichtung (2, 3), die konfiguriert ist, um in die Steuervorrichtung (6) einen zweiten erfassten Wert (P2, P3) einzugeben, der durch Erfassen einer Geschwindigkeit oder einer Beschleunigung des Fahrzeugs (8) erhalten wird, wobei
wenn die Steuervorrichtung (6) erfasst, dass das Rad (4) rutscht oder läuft, die Steuervorrichtung (6) basierend auf dem zweiten erfassten Wert (P2, P3) einen von der ersten Vorrichtung (1) erhaltenen Geschwindigkeitserfassungswert korrigiert und die Bewegung des Fahrzeugs (8) basierend auf den korrigierten Geschwindigkeitsinformationen steuert, während das Rad (4) rutscht oder läuft, **dadurch gekennzeichnet, dass**
wenn die Steuervorrichtung (6) erfasst, dass das Rad (4) rutscht oder läuft, die Steuervorrichtung (6) die Geschwindigkeitsinformationen korrigiert, indem sie eine Beschleunigung oder Verlangsamung einer von der zweiten Vorrichtung (2, 3) erhaltenen Geschwindigkeit zu einer basierend auf dem ersten erfassten Wert (P1) erhaltenen Geschwindigkeit addiert.

2. Zugschutzsystem (10) nach Anspruch 1, wobei
wenn die Steuervorrichtung (6) erfasst, dass das Rad (4) rutscht oder läuft, die Steuervorrichtung (6) die Geschwindigkeitsinformationen korrigiert, indem sie eine Beschleunigung oder Verlangsamung der von der zweiten Vorrichtung (2, 3) erhaltenen Geschwindigkeit zu einer basierend auf dem ersten erfassten Wert (P1) erhaltenen Geschwindigkeit addiert, bevor das Rad (4) rutscht oder läuft.

3. Zugschutzsystem (10) nach Anspruch 1, wobei
wenn die Steuervorrichtung (6) erfasst, dass das Rad (4) rutscht oder läuft, die Steuervorrichtung (6) die Geschwindigkeitsinformationen mit einer basierend auf dem ersten erfassten Wert (P1) erhaltenen Geschwindigkeit korrigiert, die sich mit einer von der zweiten Vorrichtung (2, 3) erhaltenen Beschleunigung ändert.

4. Zugschutzsystem (10) nach Anspruch 1, wobei
wenn die Steuervorrichtung (6) erfasst, dass das Rad (4) rutscht oder läuft, die Steuervorrichtung (6) die Geschwindigkeitsinformationen mit einer Geschwindigkeit korrigiert, die basierend auf dem ersten erfassten Wert (P1) erhalten wird, bevor das Rad (4) rutscht oder läuft, die sich mit einer von der zweiten Vorrichtung (2, 3) erhaltenen Beschleunigung ändert, während das Rad (4) rutscht oder läuft.

5. Zugschutzsystem (10) nach Anspruch 1, wobei
die Steuervorrichtung (6) eine bordeigene Zugvorrichtung ist, die an dem Fahrzeug (8) montiert ist und die das Fahrzeug (8) basierend auf Schutzinformationen steuert, die mindestens die Geschwindigkeitsinformationen enthalten,
die bordeigene Zugvorrichtung (6) ferner enthält:
eine Berechnungseinheit (5), die konfiguriert ist, um einen Änderungsbetrag einer Differenz zwischen einer ersten Systemgeschwindigkeit basierend auf dem ersten erfassten Wert (P1) und einer zweiten Systemgeschwindigkeit basierend auf dem zweiten erfassten Wert (P2, P3) zu erhalten;
eine Anomalitätsbenachrichtigungseinheit (7), die konfiguriert ist, um zu bestimmen, dass eine anormale Situation von mindestens einem von Leerlauf oder Schlupf des Rads (4) aufgetreten ist, wenn der Änderungsbetrag einer Differenz einen Schwellenwert überschreitet, und eine Benachrichtigung eines Bestimmungsergebnisses auszuführen, um das Bestimmungsergebnis bei der Steuerung des Fahrzeugs (8) widerzuspiegeln; und
eine Einheit (9) zur Erzeugung einer geschätzten Geschwindigkeit, die konfiguriert ist, um eine aktuelle geschätzte Geschwindigkeit zu erzeugen, die für die Steuerung des Fahrzeugs (8) verwendet wird, abhängig davon, ob die durch die Anomalitätsbenachrichtigungseinheit (7) benachrichtigte anormale Situation aufgetreten ist,
oder die bordeigene Zugsteuervorrichtung (6) verbunden ist, um ein Steuersignal zu senden und zu empfangen, und
die Einheit (9) zur Erzeugung einer geschätzten Geschwindigkeit ein Umschalten gemäß den folgenden Regeln ausführt, dass
die erste Systemgeschwindigkeit als die aktuelle geschätzte Geschwindigkeit mindestens vor einer vorbestimmten Zeitspanne vor der anormalen Situation und nachdem die anormale Situation endet, eingestellt wird, und
während einer Zeitspanne von einer Zeit vor einer vorbestimmten Zeitspanne vor der anormalen Situation bis zum Ende der anormalen Situation oder während der anormalen Situation eine Korrekturgeschwindigkeit, die durch Korrigieren der ersten Systemgeschwindigkeit mit der zweiten Systemgeschwindigkeit erhalten wird, als die aktuelle geschätzte Geschwindigkeit eingestellt wird.

6. Zugschutzsystem (10) nach Anspruch 5, das konfiguriert ist, um ein sicheres Fahren des Fahrzeugs (8) unter Verwendung der Schutzinformationen zu unterstützen, die Positionsinformationen auf der Schiene in einem Bewegungsblockabschnitt enthalten.

7. Zugschutzsystem (10) nach Anspruch 5, wobei
die zweite Vorrichtung (2, 3) als die zweite Systemgeschwindigkeit eine Grundgeschwindigkeit des Fahrzeugs (8) verwendet, die durch Anwenden eines Doppler-Effekts erhalten wird, und
eine Welle zum Erreichen des Doppler-Effekts eine elektromagnetische Welle oder eine Schallwelle ist.

8. Zugschutzsystem (10) nach Anspruch 5, wobei
die zweite Vorrichtung (2, 3) eine Änderung in einem Beschleunigungssignal verwendet, das von einem in dem Fahrzeug (8) vorgesehenen Beschleunigungssensor erfasst wird, und
die Berechnungseinheit (5) auch in der Lage ist, zu bestimmen, ob die anormale Situation aufgetreten ist, indem eine Beschleunigungsdifferenz zwischen einer ersten Systembeschleunigung und einer zweiten Systembeschleunigung anstelle des Änderungsbetrags einer Differenz zwischen der ersten Systemgeschwindigkeit und der zweiten Systemgeschwindigkeit erhalten wird.

9. Bordeigene Zugsteuervorrichtung (6), die an einem Fahrzeug (8) montiert ist, das sich auf einer Spur bewegt, wobei ein Rad (4) rollt, und die den Betrieb des Fahrzeugs (8) basierend auf einem Blockabschnitt und einer Schienenposition des Fahrzeugs (8) in dem Blockabschnitt steuert, wobei
die bordeigene Zugsteuervorrichtung (6)
einen ersten erfassten Wert (P1), der von einer ersten Vorrichtung (1) erhalten wird, die konfiguriert ist, um die Drehung des Rads (4) und/oder einer Achse des Rads (4) zu erfassen, und einen zweiten erfassten Wert (P2, P3) erfasst, der von einer zweiten Vorrichtung (2, 3) erhalten wird, die konfiguriert ist, um einen Bewegungszustand des Fahrzeugs (8) zu erfassen,
eine Geschwindigkeit des Fahrzeugs (8) basierend auf dem ersten erfassten Wert (P1) berechnet,
eine Bewegungsstrecke des Fahrzeugs (8) basierend auf der Geschwindigkeit berechnet,
die Schienenposition des Fahrzeugs (8) basierend auf der Bewegungsstrecke berechnet,
einen Schlupf oder Leerlauf des Rads (4) basierend auf dem ersten erfassten Wert (P1) erfasst, und
wenn der Schlupf oder Leerlauf erfasst wird, die Geschwindigkeit des Fahrzeugs (8) während des Schlupfs oder Leerlaufs basierend auf dem zweiten erfassten Wert (P2, P3) korrigiert, wobei
die bordeigene Zugsteuervorrichtung (6) die Geschwindigkeit korrigiert, indem sie eine Beschleunigung oder Verlangsamung einer von der zweiten Vorrichtung (2, 3) erhaltenen Geschwindigkeit zu einer basierend auf dem ersten erfassten Wert (P1) erhaltenen Geschwindigkeit addiert.

10. Zugschutzsteuerverfahren, bei dem eine bordeigene Zugsteuervorrichtung (6), die an einem Fahrzeug (8) montiert ist, das sich auf einer Spur bewegt, wobei ein Rad (4) rollt, das Fahrzeug (8) basierend auf Schutzinformationen Ysteuert, die mindestens Geschwindigkeitsinformationen Venthalten, wobei das Zugschutzsteuerverfahren umfasst:
einen ersten Systemgeschwindigkeitserfassungsschritt einer ersten Vorrichtung (1), die die Drehung des Rads (4) und/oder einer Achse des Rads (4) erfasst und eine erste Systemgeschwindigkeit ausgibt;
einen zweiten Systemgeschwindigkeitserfassungsschritt einer zweiten Vorrichtung (2, 3), die einen Bewegungszustand des Fahrzeugs (8) erfasst und eine zweite Systemgeschwindigkeit ausgibt;
einen Differenzberechnungsschritt einer Differenzberechnungseinheit (5), die einen Änderungsbetrag einer Differenz zwischen der ersten Systemgeschwindigkeit und der zweiten Systemgeschwindigkeit erhält;
einen Anomalitätsbenachrichtigungsschritt einer Anomalitätsbenachrichtigungseinheit (7), die bestimmt, dass eine anormale Situation von mindestens einem von Leerlauf oder Schlupf des Rads (4) aufgetreten ist, wenn der Änderungsbetrag einer Differenz einen Schwellenwert überschreitet, und die bordeigene Zugsteuervorrichtung (6) über ein Signal zum Auftreten einer anormalen Situation benachrichtigt;
einen Schritt zur Erzeugung einer geschätzten Geschwindigkeit einer Einheit (9) zur Erzeugung einer geschätzten Geschwindigkeit, die eine aktuelle geschätzte Geschwindigkeit, die in der bordeigenen Zugvorrichtung (6) verwendet wird, abhängig davon umschaltet, ob die anormale Situation aufgetreten ist; und
einen Zugsteuerschritt der bordeigenen Zugsteuervorrichtung (6), die das Fahrzeug (8) unter Verwendung der aktuellen geschätzten Geschwindigkeit steuert, wobei
in dem Schritt zur Erzeugung einer geschätzten Geschwindigkeit ein Umschalten gemäß den folgenden Regeln ausgeführt wird, dass
die erste Systemgeschwindigkeit als die aktuelle geschätzte Geschwindigkeit mindestens vor einer vorbestimmten Zeitspanne vor der anormalen Situation und nachdem die anormale Situation endet, eingestellt wird, und
während einer Zeitspanne von einer Zeit vor einer vorbestimmten Zeitspanne vor der anormalen Situation bis zum Ende der anormalen Situation oder während der anormalen Situation eine Korrekturgeschwindigkeit, die durch Korrigieren der ersten Systemgeschwindigkeit mit der zweiten Systemgeschwindigkeit erhalten wird, als die aktuelle geschätzte Geschwindigkeit eingestellt wird, wobei
wenn die bordeigene Zugsteuervorrichtung (6) erfasst, dass das Rad (4) rutscht oder läuft, die bordeigene Zugvorrichtung (6) Geschwindigkeitsinformationen korrigiert, indem sie eine Beschleunigung oder Verlangsamung einer von der zweiten Vorrichtung (2, 3) erhaltenen Geschwindigkeit zu einer basierend auf dem ersten erfassten Wert (P1) erhaltenen Geschwindigkeit addiert.

11. Zugschutzsteuerverfahren nach Anspruch 10, wobei
wenn der Änderungsbetrag einer Differenz zu einem Wert zurückkehrt, der gleich oder kleiner als der Schwellenwert ist, nachdem die Differenz einen Schwellenwert überschreitet und die anormale Situation auftritt, die Anomalitätsbenachrichtigungseinheit (7) bestimmt, dass die anormale Situation geendet hat.

## Revendications

1. Système de protection de train (10) incluant un dispositif de commande (6) configuré pour commander le mouvement d'un véhicule (8) se déplaçant sur une voie avec une roue (4) roulant, le système de protection de train (10) comprenant :
un premier dispositif (1) configuré pour détecter la rotation d'au moins l'un de la roue (4) et d'un essieu de la roue (4) pour générer des informations de vitesse et pour entrer les informations de vitesse en tant que première valeur détectée (P1) dans le dispositif de commande (6) ; et
un second dispositif (2, 3) configuré pour entrer, dans le dispositif de commande (6), une seconde valeur détectée (P2, P3) obtenue en détectant une vitesse ou une accélération du véhicule (8), dans lequel
lorsque le dispositif de commande (6) détecte que la roue (4) glisse ou tourne, le dispositif de commande (6) corrige, sur la base de la seconde valeur détectée (P2, P3), une valeur de vitesse détectée obtenue à partir du premier dispositif (1) et commande le mouvement du véhicule (8) sur la base des informations de vitesse corrigées tandis que la roue (4) glisse ou tourne, **caractérisé en ce que**,
lorsque le dispositif de commande (6) détecte que la roue (4) glisse ou tourne, le dispositif de commande (6) corrige les informations de vitesse en ajoutant une accélération ou une décélération d'une vitesse obtenue par le second dispositif (2, 3) à une vitesse obtenue sur la base de la première valeur détectée (P1).

2. Système de protection de train (10) selon la revendication 1, dans lequel
lorsque le dispositif de commande (6) détecte que la roue (4) glisse ou tourne, le dispositif de commande (6) corrige les informations de vitesse en ajoutant une accélération ou une décélération de la vitesse obtenue par le second dispositif (2, 3) à une vitesse obtenue sur la base de la première valeur détectée (P1) avant que la roue (4) ne glisse ou tourne.

3. Système de protection de train (10) selon la revendication 1, dans lequel
lorsque le dispositif de commande (6) détecte que la roue (4) glisse ou tourne, le dispositif de commande (6) corrige les informations de vitesse avec une vitesse obtenue sur la base de la première valeur détectée (P1) changeant avec une accélération obtenue par le second dispositif (2, 3).

4. Système de protection de train (10) selon la revendication 1, dans lequel
lorsque le dispositif de commande (6) détecte que la roue (4) glisse ou tourne, le dispositif de commande (6) corrige les informations de vitesse avec une vitesse, qui est obtenue sur la base de la première valeur détectée (P1) avant que la roue (4) ne glisse ou tourne, changeant avec une accélération obtenue par le second dispositif (2, 3) tandis que la roue (4) glisse ou tourne.

5. Système de protection de train (10) selon la revendication 1, dans lequel
le dispositif de commande (6) est un dispositif embarqué de train qui est monté sur le véhicule (8) et qui commande le véhicule (8) sur la base d'informations de protection incluant au moins les informations de vitesse,
le dispositif embarqué de train (6) inclut en outre :
une unité de calcul (5) configurée pour obtenir une quantité de changement dans une différence entre une première vitesse de système sur la base de la première valeur détectée (P1) et une seconde vitesse de système sur la base de la seconde valeur détectée (P2, P3) ;
une unité de notification d'anomalie (7) configurée pour déterminer qu'une situation anormale d'au moins l'un d'un ralenti ou d'un glissement de la roue (4) s'est produite lorsque la quantité de changement dans une différence dépasse un seuil, et exécuter une notification d'un résultat de détermination de manière à refléter le résultat de détermination dans la commande du véhicule (8) ; et
une unité de génération de vitesse estimée (9) configurée pour générer une vitesse estimée actuelle utilisée pour la commande du véhicule (8) selon que la situation anormale notifiée par l'unité de notification d'anomalie (7) s'est produite ou non,
ou le dispositif embarqué de commande de train (6) est connecté de manière à envoyer et recevoir un signal de commande, et
l'unité de génération de vitesse estimée (9) exécute une commutation selon les règles suivantes :
la première vitesse de système est définie comme la vitesse estimée actuelle au moins avant une période de temps prédéterminée avant la situation anormale et après que la situation anormale se termine, et
pendant une période allant d'un temps avant une période de temps prédéterminée avant la situation anormale à la fin de la situation anormale, ou pendant la situation anormale, une vitesse de correction obtenue en corrigeant la première vitesse de système avec la seconde vitesse de système est définie comme la vitesse estimée actuelle.

6. Système de protection de train (10) selon la revendication 5, configuré pour prendre en charge une conduite sûre du véhicule (8) en utilisant les informations de protection incluant des informations de position sur rail dans une section de bloc mobile.

7. Système de protection de train (10) selon la revendication 5, dans lequel
le second dispositif (2, 3) utilise, comme seconde vitesse de système, une vitesse au sol du véhicule (8) obtenue en appliquant un effet Doppler, et
une onde pour obtenir l'effet Doppler est une onde électromagnétique ou une onde sonore.

8. Système de protection de train (10) selon la revendication 5, dans lequel
le second dispositif (2, 3) utilise un changement dans un signal d'accélération détecté par un capteur d'accélération prévu dans le véhicule (8), et
l'unité de calcul (5) est également capable de déterminer si la situation anormale s'est produite en obtenant une différence d'accélération entre une première accélération de système et une seconde accélération de système au lieu de la quantité de changement dans une différence entre la première vitesse de système et la seconde vitesse de système.

9. Dispositif de commande embarqué de train (6) qui est monté sur un véhicule (8) se déplaçant sur une voie avec une roue (4) roulant et qui commande le déplacement du véhicule (8) sur la base d'une section de bloc et d'une position sur rail du véhicule (8) dans la section de bloc, dans lequel
le dispositif de commande embarqué de train (6)
acquiert une première valeur détectée (P1) obtenue par un premier dispositif (1) configuré pour détecter la rotation d'au moins l'un de la roue (4) et d'un essieu de la roue (4), et une seconde valeur détectée (P2, P3) obtenue par un second dispositif (2, 3) configuré pour détecter un état de déplacement du véhicule (8),
calcule une vitesse du véhicule (8) sur la base de la première valeur détectée (P1),
calcule une distance de déplacement du véhicule (8) sur la base de la vites se,
calcule la position sur rail du véhicule (8) sur la base de la distance de déplacement,
détecte le glissement ou le ralenti de la roue (4) sur la base de la première valeur détectée (P1), et
corrige, lorsque le glissement ou le ralenti est détecté, la vitesse du véhicule (8) pendant le glissement ou le ralenti sur la base de la seconde valeur détectée (P2, P3), dans lequel
le dispositif de commande embarqué de train (6) corrige la vitesse en ajoutant une accélération ou une décélération d'une vitesse obtenue par le second dispositif (2, 3) à une vitesse obtenue sur la base de la première valeur détectée (P1).

10. Procédé de commande de protection de train dans lequel un dispositif de commande embarqué de train (6) monté sur un véhicule (8) se déplaçant sur une voie avec une roue (4) roulant commande le véhicule (8) sur la base d'informations de protection Yincluant au moins des informations de vitesse Y le procédé de commande de protection de train comprenant :
une première étape de détection de vitesse de système d'un premier dispositif (1) détectant la rotation d'au moins l'un de la roue (4) et d'un essieu de la roue (4) et délivrant en sortie une première vitesse de système ;
une seconde étape de détection de vitesse de système d'un second dispositif (2, 3) détectant un état de déplacement du véhicule (8) et délivrant en sortie une seconde vitesse de système ;
une étape de calcul de différence d'une unité de calcul de différence (5) obtenant une quantité de changement dans une différence entre la première vitesse de système et la seconde vitesse de système ;
une étape de notification d'anomalie d'une unité de notification d'anomalie (7) déterminant qu'une situation anormale d'au moins l'un d'un ralenti ou d'un glissement de la roue (4) s'est produite lorsque la quantité de changement dans une différence dépasse un seuil, et notifiant au dispositif embarqué de commande de train (6) un signal d'occurrence de situation anormale ;
une étape de génération de vitesse estimée d'une unité de génération de vitesse estimée (9) commutant une vitesse estimée actuelle utilisée dans le dispositif embarqué de train (6) selon que la situation anormale s'est produite ou non ; et
une étape de commande de train du dispositif embarqué de commande de train (6) commandant le véhicule (8) en utilisant la vitesse estimée actuelle, dans lequel
dans l'étape de génération de vitesse estimée, une commutation est exécutée selon les règles suivantes :
la première vitesse de système est définie comme la vitesse estimée actuelle au moins avant une période de temps prédéterminée avant la situation anormale et après que la situation anormale se termine, et
pendant une période allant d'un temps avant une période de temps prédéterminée avant la situation anormale à la fin de la situation anormale, ou pendant la situation anormale, une vitesse de correction obtenue en corrigeant la première vitesse de système avec la seconde vitesse de système est définie comme la vitesse estimée actuelle, dans lequel
lorsque le dispositif de commande embarqué de train (6) détecte que la roue (4) glisse ou tourne, le dispositif embarqué de train (6) corrige des informations de vitesse en ajoutant une accélération ou une décélération d'une vitesse obtenue par le second dispositif (2, 3) à une vitesse obtenue sur la base de la première valeur détectée (P1).

11. Procédé de commande de protection de train selon la revendication 10, dans lequel
lorsque la quantité de changement dans une différence revient à une valeur égale ou inférieure au seuil après que la différence dépasse un seuil et que la situation anormale se produit, l'unité de notification d'anomalie (7) détermine que la situation anormale s'est terminée.
